# EUROPÄISCHE PATENTSCHRIFT

(11) **EP 3 144 187 B1**
(45) Veröffentlichungstag und Bekanntmachung des Hinweises auf die Patenterteilung: **29.08.2018**
(21) Anmeldenummer: 15185477.5
(22) Anmeldetag: 16.09.2015
(51) Int. Cl.: B60R 19/48

(54) **VEKLEIDUNGSBAUTEIL FÜR EIN FAHRZEUG UND VERFAHREN ZUM BEFESTIGEN UND AUSRICHTEN EINES SENSORS UND/ODER EINER SENSORAUFNAHME AN EINEM VERKLEIDUNGSBAUTEIL EINES FAHRZEUGS SOWIE EIN FAHRZEUG MIT EINEM DERARTIGEN VERKLEIDUNGSBAUTEIL**
CLADDING COMPONENT FOR A VEHICLE AND METHOD FOR SECURING AND ALIGNING A SENSOR AND/OR A SENSOR MOUNTING ON A CLADDING COMPONENT OF A VEHICLE AND A VEHICLE WITH SUCH A CLADDING COMPONENT
COMPOSANT D'HABILLAGE POUR UN VÉHICULE AUTOMOBILE ET PROCÉDÉ DE FIXATION ET D'ALIGNEMENT D'UN CAPTEUR ET/OU D'UN LOGEMENT DE CAPTEUR SUR UN COMPOSANT D'HABILLAGE D'UN VÉHICULE AUTOMOBILE ET VÉHICULE AUTOMOBILE ÉQUIPÉ D'UN TEL COMPOSANT D'HABILLAGE

(43) Veröffentlichungstag der Anmeldung: 22.03.2017
(73) Patentinhaber: SMP Deutschland GmbH, 79268 Bötzingen (DE)
(72) Erfinder: Bleile, Claus, 79227 Schallstadt (DE); Schmidt, Tobias, 79291 Merdingen (DE)
(74) Vertreter: Westphal, Mussgnug & Partner Patentanwälte mbB

(56) Entgegenhaltungen:
- EP-A2- 1 342 626
- US-A1- 2006 267 359

## Beschreibung

Die vorliegende Erfindung betrifft ein Verkleidungsbauteil für ein Fahrzeug. Weiterhin betrifft die Erfindung ein Verfahren zum Befestigen und Ausrichten eines Sensors und/oder einer Sensoraufnahme an einem Verkleidungsbauteil eines Fahrzeugs sowie ein Fahrzeug mit einem derartigen Verkleidungsbauteil.

Viele Fahrzeuge weisen Assistenzsysteme auf, welche den Fahrer im Betrieb des Fahrzeugs unterstützen. Ein Beispiel derartiger Assistenzsysteme sind Einparkhilfen (PDC: Park Distance Control), bei denen der Fahrer beim Einparken eine optische und/oder akustische Mitteilung über den verbleibenden Abstand zu einem Gegenstand in der Nähe des Fahrzeugs bekommt, wodurch der Fahrer einen Aufprall mit dem Gegenstand und somit eine Beschädigung des Fahrzeugs und des Gegenstands verhindern und gleichzeitig den zur Verfügung stehenden Parkraum bestmöglich ausnutzen kann. Ein weiteres Beispiel sind Parklenkassistenten (PLA), bei denen das Fahrzeug automatisch in Längs- und Querparklücken gesteuert wird. Parklenkassistenten sind zudem in der Lage, das Fahrzeug aus Längsparklücken auszuparken. Parklenkassistenten unterstützen den Fahrer, indem sie selbsttätig die optimalen Lenkradbewegungen durchführen, um auf der Ideallinie rückwärts einzuparken. Die Vermessung der Parklücke, die Zuweisung der Startposition und die Lenkbewegungen übernimmt der Parklenkassistent automatisch. Der Fahrer muss nur noch Gas geben und bremsen. Ein drittes Beispiel für Assistenzsysteme sind Spurwechselassistenten, bei denen das Umfeld des fahrenden Fahrzeugs daraufhin überprüft wird, ob sich andere Fahrzeuge auf der Spur befinden, auf die der Fahrer wechseln will. Hierdurch wird dem Fahrer ein Hinweis darüber gegeben, ob es bei einem Spurwechsel zu einer Kollision mit anderen Fahrzeugen kommen könnte.

Die Funktionen dieser Assistenzsysteme basieren auf Daten, die von entsprechend ausgebildeten Sensoren, beispielsweise Radar- und/oder Ultraschallsensoren, erfasst werden. Diese Sensoren sind in den Verkleidungsbauteilen des Fahrzeugs angeordnet, insbesondere im Stoßfänger und in der Seitenverkleidung des Fahrzeugs. Je nachdem, über welche Assistenzsysteme das Fahrzeug verfügt, sind unterschiedlich viele Sensoren notwendig. Typischerweise verfügen die Fahrzeuge allein im Stoßfänger über zwischen vier und sechs Sensoren. Die Genauigkeit der Assistenzsysteme und damit ihre Zuverlässigkeit hängen in besonderem Maße von der exakten Position und Ausrichtung eines jeden Sensors in Bezug auf die Verkleidungsbauteile und die übrigen Sensoren ab. Die US 2006/267359 A1 und die EP 1 342 626 A2 zeigen Sensoraufnahmen, mit denen derartige Sensoren an Verkleidungsbauteilen und insbesondere an Stoßfängern befestigt werden können. Die US 2006/0267359 A1 zeigt ein Verkleidungsbauteil gemäß dem Oberbegriff vom Anspruch 1 und ein Verfahren gemäß dem Oberbegriff vom Anspruch 10. Die Verkleidungsbauteile weisen für jeden Fahrzeugtyp charakteristische Wölbungen auf. Zudem sind die Sensoren bei jedem Fahrzeugtyp an etwas anderen Stellen in den Verkleidungsbauteilen angeordnet. Bislang werden die Sensoren mit Sensoraufnahmen an den Verkleidungsbauteilen befestigt, die Fügeflansche aufweisen, welche der Geometrie bzw. dem Verlauf der Wölbung der Verkleidungsbauteile an der entsprechenden Stelle entsprechen. Somit ist es notwendig, für jede Stelle, an welcher der betreffende Sensor angeordnet werden soll, einen stellenspezifischen Fügeflansch bereitzustellen und vorzuhalten. Die hiermit verbundene relativ hohe Anzahl unterschiedlicher Sensoraufnahmen stellt sowohl einen konstruktiven als auch einen logistischen Aufwand dar, letzteres insbesondere deshalb, da bei der Fertigung sichergestellt werden muss, dass eine ausreichende Anzahl der benötigten Sensoraufnahmen vorgehalten wird. Zudem ist die Gefahr, dass die falschen Sensoraufnahmen verbaut werden, relativ hoch, da sich die stellenspezifischen Fügeflansche mitunter sehr ähneln. Da aber in diesem Fall die Geometrie des Fügeflansches nicht dem Verlauf des Verkleidungsbauteils entspricht, werden die geforderten Abzugskräfte nicht erreicht, so dass sich die Sensoraufnahme im Betrieb des Fahrzeugs vom Verkleidungsbauteil lösen kann.

Es ist daher Aufgabe einer Ausführungsform der vorliegenden Erfindung, eine Möglichkeit zu schaffen, die Sensoren unabhängig von der Geometrie bzw. dem Verlauf der Wölbung am Verkleidungsbauteil zu befestigen und damit die Anzahl der benötigten Sensoraufnahmen und den fertigungstechnischen und logistischen Aufwand zu reduzieren.

Gelöst wird die Aufgabe mit den in Anspruch 1, 9, und 10 angegebenen Merkmalen. Vorteilhafte Ausführungsformen sind Gegenstand der Unteransprüche.

Eine Ausführungsform der Erfindung betrifft ein Verkleidungsbauteil für ein Fahrzeug, umfassend eine Wandung und einen oder mehrere Befestigungsabschnitte zum Ausrichten und Befestigen eines Sensors am Verkleidungsbauteil, wobei die Befestigungsabschnitte einstückig mit der Wandung ausgebildet oder einstückig an die Wandung angeformt sind, und zumindest in einem Übergangsbereich zur Wandung eine verminderte Wandstärke aufweisen. Hierbei kann das Verhältnis zwischen der verminderten Wandstärke und der Wandstärke der Wandung im übrigen Verkleidungsbauteil zwischen 0,1 und 0,8 betragen. Die Befestigungsabschnitte werden dort vorgesehen, wo die Sensoren angeordnet werden sollen, unabhängig davon, welchen Verlauf die Wandung an dieser Stelle aufweist. Somit ist es nicht mehr notwendig, Fügeflansche zu verwenden, welche an den Verlauf der Wandung an der Stelle angepasst sind, an denen die Sensoren angeordnet werden sollen. Vielmehr kann vollständig auf die Verwendung von Fügeflanschen verzichtet werden, wodurch der fertigungstechnische und logistische Aufwand deutlich gesenkt werden kann. Dadurch, dass auf die Verwendung von Fügeflansche verzichtet werden kann, fällt auch die Gefahr weg, dass für eine gegebene Stelle, an welche ein Sensor angeordnet werden soll, ein falscher Fügeflansch verwendet wird. Die hierdurch verursachte Gefahr des unkontrollierten Lösens des Sensors vom Verkleidungsbauteil wird hierdurch ebenfalls deutlich verringert.

Dadurch, dass die Befestigungsabschnitte zumindest im Übergangsbereich zur Wandung des Verkleidungsbauteils eine verminderte Wandstärke aufweisen, werden Einfallstellen und Abzeichnungen in der Wandung vermieden. Einfallstellen und Abzeichnungen stören den Verlauf der sichtbaren äußeren Oberfläche der Wandung, so dass ein negativer optischer Eindruck entsteht. Mit der verminderten Wandstärke wird der negative optische Eindruck des Verkleidungsbauteils vermieden.

Ferner umfasst das Verkleidungsbauteil zumindest im Übergangsbereich ein Stabilisierungsmittel zum Stabilisieren der Befestigungsabschnitte. Auch wenn das Vorsehen einer verminderten Wandstärke aufgrund der oben genannten Gründe vorteilhaft ist, so haben die verminderten Wandstärken den Nachteil, dass die Befestigungsabschnitte insgesamt instabiler werden und folglich geringere Kräfte und Momente übertragen können. Dies wird insbesondere dann deutlich, wenn man sich vor Augen führt, dass die verminderte Wandstärke maximal 0,6 mm betragen darf, um die Entstehung der Einfallstellen und Abzeichnungen sicher zu verhindern. Um dennoch die im Betrieb des Fahrzeugs auftretenden Kräfte sicher übertragen zu können, wird im Übergangsbereich ein Stabilisierungsmittel vorgesehen, mit welchem die Befestigungsabschnitte stabilisiert werden. Hierbei kann es sich beispielsweise um Stütz- oder Spannringe oder Spannklammern handeln, welche die Stabilität der Befestigungsabschnitte insbesondere dort, wo sie eine verminderte Wandstärke aufweisen, erhöhen.

In einer alternativen Ausführungsform ist das Stabilisierungsmittel als ein Klebstoff ausgebildet oder umfasst Klebstoff. Klebstoffe haben den Vorteil, dass sie in flüssiger oder viskoser Form aufgetragen werden können und sich somit dem Verlauf der Wölbung des Verkleidungsbauteils in dem Bereich, in welchem sich die Befestigungsabschnitte befinden, anpassen. Insofern können die Klebstoffe überall und unabhängig vom Verlauf der Wölbung verwendet werden. Ein spezifisches Werkzeug wird nicht benötigt. Nachdem der Klebstoff aufgetragen worden ist, härtet er innerhalb einer bestimmten Zeit aus, wodurch der Klebstoff ebenfalls die Befestigungsabschnitte stabilisieren. Dabei kann der Klebstoff mittels einer äußeren Einwirkung aushärtbar sein. Die äußere Einwirkung kann dabei ein Schritt des Fertigungsverfahrens sein. Hierdurch kann der Beginn des Aushärteprozesses gezielt gewählt und der Aushärteprozess beschleunigt werden. Vor diesem Schritt ändert sich die Viskosität des Klebstoffs nicht, wohingegen nach dem Schritt die Aushärtung beginnt.

Dabei bietet es sich an, wenn die äußere Einwirkung die Bestrahlung mittels einer Strahlenquelle und/oder die Zugabe eines Aushärtmittels und/oder die Einwirkung von Feuchtigkeit ist. Eine Strahlenquelle kann recht einfach in die Nähe des Klebstoffs gebracht und gut aktiviert und deaktiviert werden. Die Wellenlänge der von der Strahlenquelle ausgesendeten Strahlen wird auf den Klebstoff angepasst. Es kann sich dabei um Lichtstrahlen im sichtbaren Bereich, um Wärmestrahlen und/oder insbesondere um UV-Strahlen handeln. Auch die Zugabe eines Aushärtmittels ist aus fertigungstechnischer Sicht relativ einfach, da das Aushärtmittel mittels einer Dispensiereinrichtung, beispielsweise einer Kartusche, auf den Klebstoff aufgebracht werden kann, um den Aushärteprozess zu initiieren. Idealerweise ist die Dispensiereinrichtung in die Auftrageeinrichtung, mit welcher der Klebstoff aufgetragen wird, integriert. Der Klebstoff und das Aushärtmittel bilden ein Zweikompentensystem (2K), beispielsweise Methylmethacrylat-Klebstoffe, die zweikomponentige Reaktionsklebstoffe sind, bei denen das eingesetzte Monomer Methylmethacrylat durch eine radikalische Kettenreaktion polymerisiert wird, die vom Aushärtmittel ausgelöst wird und die zur Aushärtung des Klebstoffs führt. Feuchtigkeit kann mittels einer Sprühpistole, die feine Wassertropfen erzeugt, auf den Klebstoff aufgebracht werden. Als Beispiel sei ein RTV-Silikon genannt, welches ein bei Raumtemperatur vernetzendes Silikon ist. Zur Vernetzung, die zur Aushärtung des Klebstoffs führt, wird etwas Wasser benötigt, was insbesondere tropfen- oder dampfförmig in der Nähe des Klebstoffs abgegeben werden kann. Je nach verwendetem 2K-System kann aber bereits die Luftfeuchtigkeit in der Umgebung des Verkleidungsbauteils und des Klebstoffs ausreichen, um eine Aushärtung zu bewirken. Bei allen Ausgestaltungen kann mit relativ einfachen Mitteln der Aushärteprozess zu einem wählbaren Zeitpunkt ausgelöst werden, was sich dann anbietet, wenn die Sensoraufnahme die gewünschte Position und Ausrichtung in Bezug auf das Verkleidungsbauteil eingenommen hat. Je schneller der Klebstoff aushärtet, desto kürzer ist die Fertigung des Verkleidungsbauteils und desto einfacher können die gewünschte Position und Ausrichtung fixiert werden.

In einer modifizierten Ausführungsform sind die Befestigungsabschnitte als eine Sensoraufnahme zum Aufnehmen des Sensors ausgebildet. Üblicherweise werden die Sensoren nicht direkt mit dem Verkleidungsbauteil verbunden, sondern in eine Sensoraufnahme eingebracht, die mit dem Verkleidungsbauteil verbunden wird. Die Sensoraufnahme besteht aus einem Material, welches sich gut mit demjenigen Material verbinden lässt, aus dem die Wandung des Verkleidungsbauteils gefertigt ist. Häufig wird dasselbe Material für die Sensoraufnahme und die Wandung des Verkleidungsbauteils verwendet. Wenn jedoch die Befestigungsabschnitte direkt als Sensoraufnahme ausgebildet sind, muss nur noch der Sensor in die Sensoraufnahme eingebracht und dort auf übliche Weise, beispielsweise mit Rastmitteln, positioniert und befestigt werden, so dass es nicht mehr notwendig ist, eine separate Sensoraufnahme mit dem Verkleidungsbauteil zu verbinden. Hierdurch wird ein Fügeschritt eingespart, wodurch der Fertigungsprozess beschleunigt und dadurch kostengünstiger wird.

In einer alternativen Ausführungsform sind die Befestigungsabschnitte zum Zusammenwirken mit einer separaten Sensoraufnahme zum Aufnehmen des Sensors ausgebildet. Je nach Ausführung des Sensors wird dieser vom Hersteller so ausgeliefert, dass er bereits einer Sensoraufnahme aufgenommen ist. In diesem Fall wäre es mit zusätzlichem Aufwand verbunden, den Sensor aus der mitgelieferten Sensoraufnahme zu entfernen um ihn anschließend in die an geformte Sensoraufnahme des Verkleidungsbauteils einzusetzen. In diesem Fall bietet es sich an, die Befestigungsabschnitte so auszuführen, dass die separate Sensoraufnahme mit den Befestigungsabschnitten zusammen wirken kann und der Sensor zusammen mit der separaten Sensoraufnahme am Verkleidungsbauteil befestigt werden kann.

Bei der alternativen Ausführungsform bietet es sich an, wenn die Befestigungsabschnitte eine Anzahl von Rippen aufweisen, welche mit der Sensoraufnahme zusammenwirken. Üblicherweise umschließt die Sensoraufnahm den Sensor zumindest zum größten Teil. Aus diesem Grund ist es nicht notwendig, auch die Befestigungsabschnitte so auszuformen, dass sie die Sensoraufnahme komplett umschließen. Es genügt, dass eine Anzahl von Rippen mit der Sensoraufnahme zusammenwirkt, wodurch Material beim Verkleidungsbauteil eingespart werden kann.

Eine andere Ausführungsform des Verkleidungsbauteils ist dadurch gekennzeichnet, dass die Befestigungsabschnitte eine Anzahl von Formschlussmitteln aufweisen. Formschlussmittel sind insbesondere Vertiefungen, Bohrungen und/oder Erhebungen. Mit den Formschlussmitteln kann die Sensoraufnahme exakt in Bezug auf die Befestigungsabschnitte und folglich auf das Verkleidungsbauteil als Ganzes positioniert werden. Hierzu kann die Sensoraufnahme korrespondierende Formschlussmittel aufweisen, welche mit den Formschlussmitteln der Befestigungsabschnitte formschlüssig zusammenwirken. Darüber hinaus bewirken die Formschlussmittel der Befestigungsabschnitte eine Vergrößerung der Oberfläche, wodurch für den Fall, dass ein Klebstoff als Stabilisierungsmittel verwendet wird, die Kontaktfläche und damit die Stabilisierungs- und Klebwirkung erhöht wird. Zudem kann auch ein Formschluss in Bezug auf den Klebstoff bereitgestellt werden, wenn dieser in die Vertiefungen oder Bohrungen eindringt oder die Erhebungen hintergreift, so dass die übertragbaren Zugkräfte im Vergleich zu einer Klebeverbindung ohne die Verwendung von Formschlussmitteln erhöht werden.

Bei einer weiteren Ausführungsform begrenzt die Wandung einen Innenraum des Verkleidungsbauteils, wobei die Befestigungsabschnitte in den Innenraum hineinragen. Zwar wäre es denkbar, die Sensoren zumindest teilweise außerhalb des Innenraums des Verkleidungsbauteils anzuordnen, wodurch aber insbesondere dann, wenn das Verkleidungsbauteil von außen gut sichtbar ist, ein optisch störender Eindruck erzeugt wird. Dadurch, dass die Befestigungsabschnitte in den Innenraum hineinragen, werden folglich auch die Sensoren im Innenraum angeordnet, so dass diese den optischen Eindruck des Verkleidungsbauteils nicht stören. Zudem werden die Sensoren durch die Wandung des Verkleidungsbauteils vor äußeren Einflüssen wie Schmutz und Steinschlag geschützt, und durch ihre Funktionsfähigkeit länger aufrechterhalten werden kann.

In einer modifizierten Ausführungsform weist die Wandung eine Anzahl von Durchgangsöffnungen auf, wobei die Befestigungsabschnitte im Bereich der Durchgangsöffnungen angeordnet sind. Je nachdem, auf welchem Messprinzip der Sensor beruht, muss dieser direkt mit der Umgebung in Kontakt treten können, so dass er von der Wandung des Verkleidungsbauteils gestört werden würde. Derartige Sensoren sind insbesondere diejenigen, die auf optischer Basis arbeiten. Für den Fall wird eine Durchgangsöffnung in der Wandung des Verkleidungsbauteils vorgesehen. Die Befestigungsabschnitte werden entsprechend angeordnet, so dass der Sensor zumindest teilweise in der Durchgangsöffnung angeordnet ist und folglich ungestört in Wechselwirkung mit der Umgebung treten kann.

Eine Ausbildung der Erfindung betrifft ein Verkleidungsbauteil für ein Fahrzeug, umfassend eine Wandung und einen oder mehrere Sensoraufnahmen zum Aufnehmen eines Sensors, wobei die Sensoraufnahme einstückig mit der Wandung ausgebildet oder einstückig an die Wandung angeformt ist. Üblicherweise werden die Sensoren nicht direkt mit dem Verkleidungsbauteil verbunden, sondern in eine Sensoraufnahme eingebracht, die mit dem Verkleidungsbauteil verbunden wird. Die Sensoraufnahme besteht aus einem Material, welches sich gut mit demjenigen Material verbinden lässt, aus dem die Wandung des Verkleidungsbauteils gefertigt ist. Häufig wird dasselbe Material für die Sensoraufnahme und die Wandung des Verkleidungsbauteils verwendet. Wenn jedoch die Befestigungsabschnitte direkt als Sensoraufnahme ausgebildet sind, muss nur noch der Sensor in die Sensoraufnahme eingebracht und dort auf übliche Weise, beispielsweise mit Rastmitteln, positioniert und befestigt werden, so dass es nicht mehr notwendig ist, eine separate Sensoraufnahme mit dem Verkleidungsbauteil zu verbinden. Hierdurch wird ein Fügeschritt eingespart, wodurch der Fertigungsprozess beschleunigt und dadurch günstiger wird.

Hierbei weist die Sensoraufnahme zumindest in einem Übergangsbereich zur Wandung eine verminderte Wandstärke auf. Mit dem Vorsehen einer verminderten Wandstärke wird das Entstehen von optisch störenden Einfallstellen und Abzeichnungen auf der sichtbaren äußeren Oberfläche des Verkleidungsbauteils vermieden.

Darüber hinaus umfasst das Verkleidungsbauteil zumindest im Übergangsbereich ein Stabilisierungsmittel zum Stabilisieren der Befestigungsabschnitte. Auch wenn das vorsehen einer verminderten Wandstärke aufgrund der oben genannten Gründe vorteilhaft ist, so haben die verminderten Wandstärken den Nachteil, dass die Befestigungsabschnitte insgesamt instabiler werden und folglich geringere Kräfte und Momente übertragen können, insbesondere deshalb, da die verminderte Wandstärke maximal 0,6 mm betragen darf, um die Ausbildung von Abzeichnungen und Einfallstellen sicher zu vermeiden. Um dennoch die im Betrieb auftretenden Kräfte und Momente sicher aufnehmen zu können, kann im Übergangsbereich ein Stabilisierungsmittel vorgesehen werden, mit welchem die Befestigungsabschnitte stabilisiert werden. Hierbei kann es sich beispielsweise um Spann- oder Stützringe oder Spannklammern handeln, welche die Stabilität der Befestigungsabschnitte insbesondere dort, wo sie eine verminderte Wandstärke aufweisen, erhöhen.

Eine Ausgestaltung der Erfindung betrifft ein Fahrzeug, umfassend ein Verkleidungsbauteil nach einem der vorher beschriebenen Ausführungsformen oder Ausbildungen. Die Vorteile und technischen Effekte, die sich mit dieser Ausgestaltung des Fahrzeugs realisieren lassen, entsprechen denjenigen, die für die entsprechenden Ausführungsformen und Ausbildungen des Verkleidungsbauteils erreichen lassen. Zusammenfassend sei an dieser Stelle darauf hingewiesen, dass es nicht mehr notwendig ist, Fügeflansche vorzusehen, die auf den Verlauf der Wandung an der Stelle, an der ein Sensor angeordnet werden soll, speziell angepasst sind. Vielmehr kann ganz auf die Verwendung von Fügeflansche verzichtet werden, wodurch einerseits die Fertigung vereinfacht und andererseits die Gefahr, dass ein Fügeflansche verbaut wird, der nicht zu der gegebenen Stelle passt, beseitigt wird.

Eine Ausgestaltung der Erfindung betrifft ein Verfahren zum Befestigen und Ausrichten eines Sensors und/oder einer Sensoraufnahme an einem Verkleidungsbauteil eines Fahrzeugs, umfassend folgende Schritte:
- Bereitstellen eines Verkleidungsbauteils für Fahrzeug, welches eine Wandung aufweist,
- Anformen eines oder mehrerer Befestigungsabschnitte zum Ausrichten und Befestigen eines Sensors oder Anformen einer Sensoraufnahme zum Aufnehmen des Sensors an die Wandung des Verkleidungsbauteils beim Schritt des Bereitstellens des Verkleidungsbauteils oder mittels eines separaten Schritts, so dass die Wandung und die Befestigungsabschnitte oder die Sensoraufnahme einstückig ausgebildet sind, wobei die Befestigungsabschnitte zumindest in einem Übergangsbereich zur Wandung eine verminderte Wandstärke aufweisen, und
- Aufbringen eines Stabilisierungsmittels im Übergangsbereich zum Stabilisieren der Befestigungsabschnitte.

Die Vorteile und technischen Effekte, die sich mit dieser Ausgestaltung des Verfahrens realisieren lassen, entsprechen denjenigen, die für die entsprechenden Ausführungsformen und Ausbildungen des Verkleidungsbauteils erreichen lassen. Zusammenfassend sei an dieser Stelle darauf hingewiesen, dass es nicht mehr notwendig ist, Fügeflansche vorzusehen, die auf den Verlauf der Wandung an der Stelle, an der ein Sensor angeordnet werden soll, speziell angepasst sind. Vielmehr kann ganz auf die Verwendung von Fügeflansche verzichtet werden, wodurch einerseits die Fertigung vereinfacht und andererseits die Gefahr, dass ein Fügeflansche verbaut wird, der nicht zu der gegebenen Stelle passt, beseitigt wird.

Eine fortgebildete Ausgestaltung umfasst folgende Schritte:
- Ausbilden der Befestigungsabschnitte als eine Anzahl von Rippen,
- Aufbringen des als ein Klebstoff ausgebildeten Stabilisierungsmittels im Übergangsbereich, der mittels einer äußeren Einwirkung aushärtbar ist,
- Positionieren einer Sensoraufnahme derart, dass sie mit den Rippen und dem Klebstoff zusammenwirkt, und
- Aushärten des Klebstoffs.

In dieser Ausgestaltung werden die Rippen insbesondere im Übergangsbereich, wo sie eine verminderte Wandstärke aufweisen, mittels des Klebstoffs stabilisiert. Darüber hinaus wird die Sensoraufnahme mit dem Klebstoff am Verkleidungsbauteil befestigt, so dass der Klebstoff zwei Funktionen erfüllt, wodurch der Fertigungsprozess vereinfacht und beschleunigt werden kann. Je nach Ausgestaltung des Verfahrens kann der Klebstoff von selbst aushärten, wie es bei im Haushalt verwendeten Klebstoffen der Fall ist, oder aber die Aushärtung mittels einer äußeren Einwirkung initiiert wird, beispielsweise mit einer Bestrahlung mittels einer Strahlenquelle und/oder mit der Zugabe eines Aushärtmittels und/oder mit der Einwirkung von aktiv zugegebener Feuchtigkeit. Da im letzteren Fall der Beginn des Aushärteprozesses gewählt und beschleunigt werden kann, wird die Fertigung vereinfacht.

Die Erfindung wird im Folgenden anhand von bevorzugten Ausführungsbeispielen unter Bezugnahme auf die anhängenden Zeichnungen im Detail beschrieben. Es zeigen
- Figur 1: ein erstes Ausführungsbeispiel eines erfindungsgemäßen Verkleidungsbauteils,
- Figur 2: ein zweites Ausführungsbeispiel einer erfindungsgemäßen Verkleidungsbauteils, und
- Figur 3: ein drittes Ausführungsbeispiel einer erfindungsgemäßen Verkleidungsbauteils.

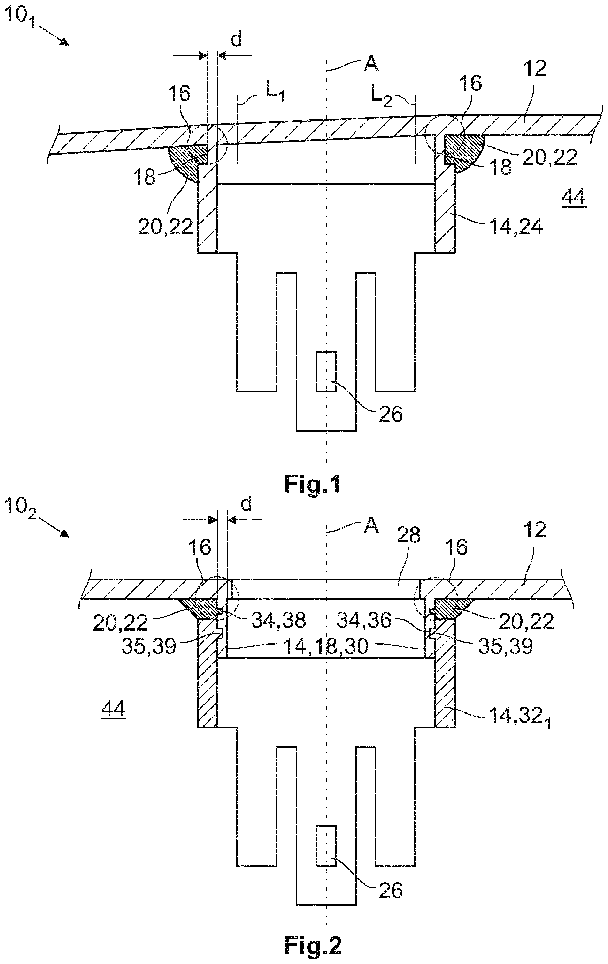

In Figur 1 ist ein erstes Ausführungsbeispiel eines erfindungsgemäßen Verkleidungsbauteils 10₁ anhand einer prinzipiellen Schnittdarstellung gezeigt. Das Verkleidungsbauteil 10₁ weist eine Wandung 12 auf, an welche ein Befestigungsabschnitt 14 einstückig angeformt ist. Je nach Ausgestaltung des Herstellungsverfahrens kann der Befestigungsabschnitt 14 bereits beim Urformprozess des Verkleidungsbauteils 10₁ hergestellt oder aber in einem weiteren Fügeprozess an die Wandung 12 angeformt werden. Zumindest in einem Übergangsbereich 16, in welchem der Befestigungsabschnitt 14 in die Wandung 12 übergeht, weist der Befestigungsabschnitt 14 eine im Vergleich zur Wandung 12 des Verkleidungsbauteils 10₁ verminderte Wandstärke 18 auf. Der Wert d der verminderten Wandstärke beträgt beispielsweise 0,6 mm, vorzugsweise zwischen 0,3 und 0,6 mm. Das Verhältnis zwischen dem Wert d der verminderten Wandstärke und der Wandstärke der Wandung im übrigen Verkleidungsbauteil kann zwischen 0,1 und 0,8 betragen. Im Übergangsbereich 16 ist ein Stabilisierungsmittel 20 angeordnet, welches im dargestellten Beispiel als Klebstoff 22 ausgeführt ist. Der Klebstoff 22 wird mit einer nicht dargestellten Auftragsvorrichtung so aufgetragen, dass er sowohl mit der Wandung 12 als auch mit dem Befestigungsabschnitt 14 in Kontakt tritt. Anschließend wird der Klebstoff 22 mittels einer ebenfalls nicht dargestellten Aushärteinrichtung ausgehärtet. Alternativ kann der Klebstoff von selbst aushärten. Hieraus resultiert eine Stabilisierung des Befestigungsabschnitts 14 insbesondere dort, wo der Befestigungsabschnitt 14 die verminderte Wandstärke 18 aufweist.

Im ersten Ausführungsbeispiel ist der Befestigungsabschnitt 14 als eine Sensoraufnahme 24 ausgeführt, so dass ein hier nicht dargestellter Sensor nur noch in die Sensoraufnahme 24 eingebracht und beispielsweise mithilfe von Rastmitteln 26 positioniert und befestigt werden muss. Je nach Ausführung kann die Sensoraufnahme 24 den Sensor vollumfänglich umschließen.

Die Wandung 12 weist bezogen auf Figur 1 eine von links nach rechts leicht ansteigende Wölbung auf. Mithilfe des erfindungsgemäßen Verkleidungsbauteils 10₁ und insbesondere mittels der Befestigungsabschnitte 14 kann der Sensor unabhängig vom Verlauf der Wölbung der Wandung 12 in dem Bereich, in welchen der Sensor angeordnet werden soll, exakt in Bezug auf das Verkleidungsbauteil 10₁ positioniert und am Verkleidungsbauteil 10₁ befestigt werden. Zusätzliche Maßnahmen beim Befestigen des Sensors, welche den Verlauf der Wandung 12 berücksichtigen, sind nicht erforderlich.

Je nachdem, auf welchem physikalischen Prinzip der verwendete Sensor basiert, kann im Bereich der Befestigungsabschnitte 14 eine die Wandung 12 durchdringende Durchgangsöffnung (nicht dargestellt) vorgesehen werden, die sich beispielsweise zwischen den Linien L₁ und L₂ erstreckt. Somit kann der Sensor direkt mit der Umgebung in Wechselwirkung treten.

In Figur 2 ist eine zweite Ausführungsform des erfindungsgemäßen Verkleidungsbauteils 10₂ ebenfalls alle anhand einer prinzipiellen Schnittdarstellung gezeigt. Im Gegensatz zum ersten Ausführungsbeispiel ist der Befestigungsabschnitt 14 nicht als eine Sensoraufnahme 24, sondern als eine Anzahl von Rippen 30 ausgeführt, die um eine Durchgangsöffnung 28 herum angeordnet sind. Die Rippen 30 weisen über ihre gesamte Länge eine im Vergleich zur Wandstärke der Wandung 12 verminderte Wandstärke 18 mit dem Wert d auf, der ebenfalls maximal 0,6 mm, vorzugweise zwischen 0,3 und 0,6 mm beträgt. Darüber hinaus weisen die Rippen 30 erste Formschlussmittel 34 auf, welche im zweiten Ausführungsbeispiel eine Anzahl von ersten Vertiefungen 36 und eine Anzahl von zweiten Vertiefungen 38 umfassen, die entlang einer Längsachse A beabstandet zueinander auf der Außenseite der Rippen 30 angeordnet sind. Eine separate Sensoraufnahme 32₁ nach einem ersten Ausführungsbeispiel umgreift die Rippen 30 radial außen und weist zweite Formschlussmittel 35 auf, die als zu den ersten Vertiefungen 36 korrespondierende Vorsprünge 39 ausgebildet sind. Wird die separate Sensoraufnahme 32₁auf die Rippen 30 aufgeschoben, werden die Vorsprünge 39 in die ersten Vertiefungen 36 eingebracht, so dass die Position der Sensoraufnahme 24 in Bezug auf das Verkleidungsbauteil 10₁ festgelegt ist. Zudem wird eine Vorfixierung bewirkt, so dass die separate Sensoraufnahme 32₁ am Verkleidungsbauteil 10₂ zumindest solange befestigt ist, bis keine Zugkräfte an der separaten Sensoraufnahme 24 entlang der Längsachse A wirken, die ein bestimmtes Maß überschreiten.

Die ersten und zweiten Vertiefungen 36, 38 sind so angeordnet und dimensioniert, dass der Vorsprung 39 der separaten Sensoraufnahme 32₁ nur in die ersten Vertiefungen 36 eingreifen kann. Wenn die Vorsprünge 39 in die ersten Vertiefungen 36 eingebracht sind, ist die separate Sensoraufnahme 32₁ beabstandet von der Wandung 12 positioniert, so dass die zweiten Vertiefungen 38 frei liegen. Um die separate Sensoraufnahme 32₁ für die im Betrieb des Fahrzeugs auftretenden Kräfte und Momente sicher am Verkleidungsbauteil 10₂ zu befestigen, wird der Klebstoff 22 im Übergangsbereich 16 zwischen den Rippen 30 und der Wandung 12 derart aufgetragen, dass er nicht nur mit der Wandung 12 und den Rippen 30 in Kontakt tritt, sondern auch mit der separaten Sensoraufnahme 32₁. Da die zweiten Vertiefungen 38 freiliegen, kann der Klebstoff 22 im flüssigen oder viskosen Zustand in die zweiten Vertiefungen 38 eindringen, so dass in Bezug auf die Längsachse A ein Formschluss zwischen den Rippen 30 und dem Klebstoff 22 bewirkt wird. Insofern stabilisiert der Klebstoff 22 nicht nur die Rippen 30, sondern verbindet die separate Sensoraufnahme 32₁₁ zudem mit dem Verkleidungsbauteil 10₂ derart, dass die separate Sensoraufnahme 32₁ auch bei dem im Betrieb des Fahrzeugs wirkenden Kräften und Momenten sicher am Verkleidungsbauteil 10₂ befestigt ist.

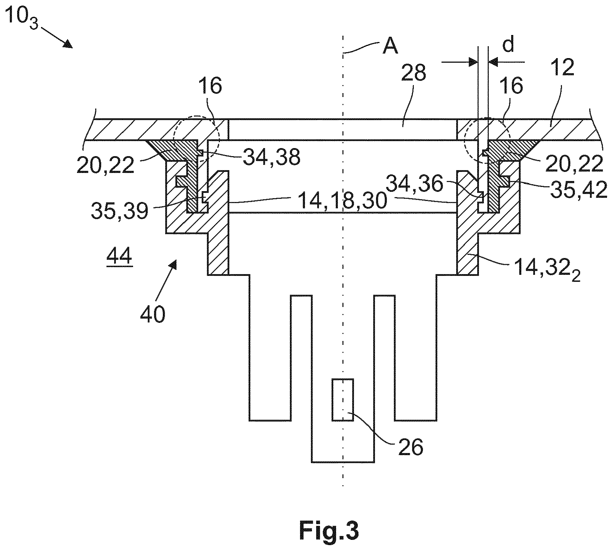

In Figur 3 ist ein drittes Ausführungsbeispiel des erfindungsgemäßen Verkleidungsbauteils 10₃ ebenfalls anhand einer prinzipiellen Schnittdarstellung gezeigt, an welchem eine separate Sensoraufnahme 32₂ nach einem zweiten Ausführungsbeispiel am Verkleidungsbauteil befestigt. Im Gegensatz zum zweiten Ausführungsbeispiel 10₂ ist die erste Vertiefung 36 auf der Innenseite der Rippen 30 angeordnet.

Wiederum wirken die ersten Vertiefungen 36 mit den in einem U-förmigen Abschnitt 40 entsprechend angeordneten Vorsprüngen 39 der separaten Sensoraufnahme 32₂ zur Ausbildung eines Formschlusses zwischen der separaten Sensoraufnahme 32₂ und den Rippen 30 sowie die zweiten Vertiefungen 38 mit dem Klebstoff 22 zum Ausbilden eines Formschlusses zwischen dem Klebstoff 22 und den Rippen 30 bezogen auf die Längsachse A zusammen. Darüber hinaus umfassen die zweiten Formschlussmittel 35 der separaten Sensoraufnahme 32₂ im U-förmigen Abschnitt 40 eine Anzahl von dritten Vertiefungen 42 auf, die so angeordnet sind, dass der Klebstoff 22 im flüssigen oder viskosen Zustand in sie eindringen kann, so dass zudem ein Formschluss zwischen dem Klebstoff 22 und der Sensoraufnahme 24 bewirkt wird. Alle Formschlüsse beziehen sich auf die Längsachse A. Der U-förmige Abschnitt 40 umgreift die Rippen 30 beidseitig. Bei Druckkräften entlastet der U-förmige Abschnitt 40 die Verbindung zu den Rippen 30 bei Druckkräften und verhindert ein Ausknicken der Rippen 30.

In allen Ausführungsformen des Verkleidungsbauteils 10₁ bis 10₃ begrenzt die Wandung 12 einen Innenraum 44, der im eingebauten Zustand zum Fahrzeug hinweist. Die Umgebung der Verkleidungsbauteile 10₁ bis 10₃ befindet sich auf der gegenüberliegenden Seite der Wandung 12. Die Befestigungsabschnitte 14 sind im Innenraum 44 angeordnet und ragen in diesen hinein.

### Bezugszeichenliste

- 10, 10₁ - 10₂: Verkleidungsbauteil
- 12: Wandung
- 14: Befestigungsabschnitt
- 16: Übergangsbereich
- 18: verminderte Wandstärke
- 20: Stabilisierungsmittel
- 22: Klebstoff
- 24: Sensoraufnahme
- 26: Rastmittel
- 28: Durchgangsöffnung
- 30: Rippen
- 32, 32₁, 32₂: separate Sensoraufnahme
- 34: erste Formschlussmittel
- 35: zweite Formschlussmittel
- 36: erste Vertiefung
- 38: zweite Vertiefung
- 39: Vorsprung
- 40: U-förmiger Abschnitt
- 42: dritte Vertiefung
- 44: Innenraum
- A: Längsachse
- d: Wandstärke
- L₁, L₂: Linien

## Patentansprüche

1. Verkleidungsbauteil (10) für ein Fahrzeug, umfassend
- eine Wandung (12),
- einen oder mehrere Befestigungsabschnitte (14) zum Ausrichten und Befestigen eines Sensors am Verkleidungsbauteil (10), wobei die Befestigungsabschnitte (14)
- einstückig mit der Wandung (12) ausgebildet oder einstückig an die Wandung (12) angeformt sind, und
- zumindest in einem Übergangsbereich (16) zur Wandung (12) eine verminderte Wandstärke (18) aufweisen,
**dadurch gekennzeichnet, dass** das Verkleidungsbauteil (10) zumindest im Übergangsbereich (16) ein Stabilisierungsmittel (20) zum Stabilisieren der Befestigungsabschnitte (14) umfasst.

2. Verkleidungsbauteil nach Anspruch 1,
**dadurch gekennzeichnet, dass** das Stabilisierungsmittel (20) als ein Klebstoff (22) ausgebildet ist oder Klebstoff (22) umfasst, der mittels einer äußeren Einwirkung aushärtbar ist.

3. Verkleidungsbauteil nach einem der vorherigen Ansprüche,
**dadurch gekennzeichnet, dass** die Befestigungsabschnitte (14) als eine Sensoraufnahme (24) zum Aufnehmen des Sensors ausgebildet sind.

4. Verkleidungsbauteil nach einem der Ansprüche 1 oder 2,
**dadurch gekennzeichnet, dass** die Befestigungsabschnitte (14) zum Zusammenwirken mit einer separaten Sensoraufnahme (32) zum Aufnehmen des Sensors ausgebildet sind.

5. Verkleidungsbauteil nach Anspruch 4,
**dadurch gekennzeichnet, dass** die Befestigungsabschnitte (14) eine Anzahl von Rippen (30) aufweisen, welche mit der separaten Sensoraufnahme (36) zusammenwirken.

6. Verkleidungsbauteil nach einem der vorherigen Ansprüche
**dadurch gekennzeichnet, dass** die Befestigungsabschnitte (14) eine Anzahl von Formschlussmitteln (34) aufweisen.

7. Verkleidungsbauteil nach einem der vorherigen Ansprüche,
**dadurch gekennzeichnet, dass** die Wandung (12) einen Innenraum (44) des Verkleidungsbauteils (10) begrenzt und die Befestigungsabschnitte (14) in den Innenraum (44) hineinragen.

8. Verkleidungsbauteil nach einem der vorherigen Ansprüche,
**dadurch gekennzeichnet, dass** die Wandung (12) eine Anzahl von Durchgangsöffnungen (28) aufweist und die Befestigungsabschnitte (14) im Bereich der Durchgangsöffnungen (28) angeordnet sind.

9. Fahrzeug, umfassend ein Verkleidungsbauteil (10) nach einem der vorherigen Ansprüche.

10. Verfahren zum Ausrichten und Befestigen eines Sensors und/oder einer Sensoraufnahme (24) an einem Verkleidungsbauteil (10) eines Fahrzeugs, umfassend folgende Schritte:
- Bereitstellen eines Verkleidungsbauteils (10) für Fahrzeug, welches eine Wandung (12) aufweist,
- Anformen eines oder mehrerer Befestigungsabschnitte (14) zum Ausrichten und Befestigen eines Sensors oder Anformen einer Sensoraufnahme (24) zum Aufnehmen des Sensors an die Wandung (12) des Verkleidungsbauteils (10) beim Schritt des Bereitstellens des Verkleidungsbauteils (10) oder mittels eines separaten Schritts, so dass die Wandung (12) und die Befestigungsabschnitte (14) oder die Sensoraufnahme (24) einstückig ausgebildet sind, wobei die Befestigungsabschnitte (14) zumindest in einem Übergangsbereich (16) zur Wandung (12) eine verminderte Wandstärke (18) aufweisen, und
- Aufbringen eines Stabilisierungsmittels (20) im Übergangsbereich (16) zum Stabilisieren der Befestigungsabschnitte (14).

11. Verfahren nach Anspruch 10, umfassend folgende Schritte:
- Ausbilden der Befestigungsabschnitte (14) als eine Anzahl von Rippen (30),
- Aufbringen des als ein Klebstoff (22) ausgebildeten Stabilisierungsmittels (20) im Übergangsbereich (16), der mittels einer äußeren Einwirkung aushärtbar ist,
- Positionieren einer Sensoraufnahme (24) derart, dass sie mit den Rippen (30) und dem Klebstoff (22) zusammenwirkt, und
- Aushärten des Klebstoffs (22).

## Claims

1. Cladding component (10) for a vehicle, comprising
- a wall (12),
- one or more fastening sections (14) for aligning and fastening a sensor to the cladding component (10), wherein the fastening sections (14)
- are designed to be of one piece with the wall (12), or are moulded onto the wall (12) in one piece, and
- they have a reduced wall thickness (18) at least in a transitional area (16) to the wall (12),
**characterised in that**
the cladding component (10), at least in the transitional area (16), comprises a stabilising element (20) in order to stabilise the fastening sections (14).

2. Cladding component according to claim 1,
**characterised in that** the stabilising element (20) is designed as an adhesive (22) or comprises an adhesive (22) that can be hardened by means of external action.

3. Cladding component according to one of the preceding claims,
**characterised in that** the fastening sections (14) are designed as a sensor mounting (24) to accommodate the sensor.

4. Cladding component according to one of the claims 1 or 2,
**characterised in that** the fastening sections (14) are designed to interact with a separate sensor mounting (32) to accommodate the sensor.

5. Cladding component according to claim 4,
**characterised in that** the fastening sections (14) have a number of ribs (30) that interact with the separate sensor mounting (36).

6. Cladding component according to one of the preceding claims,
**characterised in that** the fastening sections (14) have a number of form-fitting elements (34).

7. Cladding component according to one of the preceding claims,
**characterised in that** the wall (12) delimits an interior space (44) of the cladding component (10) and the fastening sections (14) project into the interior space (44).

8. Cladding component according to one of the preceding claims,
**characterised in that** the wall (12) has a number of through-holes (28) and the fastening sections (14) are arranged in the area of the through-holes (28).

9. Vehicle comprising a cladding component (10) according to one of the preceding claims.

10. Method for aligning and fastening a sensor and/or a sensor mounting (24) on a cladding component (10) of a vehicle, comprising the following steps:
- the provision of a cladding component (10) for a vehicle which has a wall (12),
- the moulding on of one or more fastening sections (14) for aligning and fastening a sensor, or moulding a sensor mounting (24) to accommodate the sensor onto the wall (12) of the cladding component (10) in the step in which the cladding component (10) is provided, or by means of a separate step, so that the wall (12) and the fastening sections (14) or the sensor mounting (24) are formed in one piece, wherein the fastening sections (14) have a reduced wall thickness (18) at least in a transitional area (16) to the wall (12), and
- the fitting of a stabilising element (20) in the transitional area (16) in order to stabilise the fastening sections (14).

11. Method according to claim 10, comprising the following steps:
- designing the fastening sections (14) as a number of ribs (30),
- fitting the stabilising element (20) that is designed as an adhesive (22) in the transitional area (16), this adhesive being capable of being hardened by means of external action,
- positioning a sensor mounting (24) such that it interacts with the ribs (30) and the adhesive (22), and
- hardening the adhesive (22).

## Revendications

1. Composant d'habillage (10) destiné à un véhicule comprenant :
- une paroi (12),
- au moins un segment de fixation (14) permettant d'orienter et de fixer un capteur sur le composant d'habillage (10),
le segment de fixation (14) :
- étant réalisé en une seule pièce avec la paroi (12) ou formé en une seule pièce sur la paroi (12), et
- ayant, au moins dans la zone de transition (16) avec la paroi (12) une épaisseur (18) diminuée,
**caractérisé en ce que**
le composant d'habillage (10) comporte, au moins dans la zone de transition (16) des moyens de stabilisation (20) permettant de stabiliser le segment de fixation (14).

2. Composant d'habillage conforme à la revendication 1,
**caractérisé en ce que**
les moyens de stabilisation (20) sont réalisés sous la forme d'un adhésif (22) ou renferment un adhésif (22) qui peut être durci par une action externe.

3. Composant d'habillage conforme à l'une des revendications précédentes,
**caractérisé en ce que**
le segment de fixation (14) est réalisé sous la forme d'un logement (24) de réception du capteur.

4. Composant d'habillage conforme à l'une des revendications 1 et 2,
**caractérisé en ce que**
le segment de fixation (14) est réalisé pour coopérer avec un logement indépendant (32) destiné à recevoir le capteur.

5. Composant d'habillage conforme à la revendication 4,
**caractérisé en ce que**
le segment de fixation (14) comporte un ensemble de nervures (30) qui coopèrent avec le logement de réception du capteur indépendant (36) .

6. Composant d'habillage conforme à l'une des revendications précédentes,
**caractérisé en ce que**
le segment de fixation (14) comporte un ensemble de moyens de liaison par la forme (34).

7. Composant d'habillage conforme à l'une des revendications précédentes,
**caractérisé en ce que**
la paroi (12) délimite le volume interne (44) du composant d'habillage (10) et le segment de fixation (14) pénètre dans ce volume interne (44).

8. Composant d'habillage conforme à l'une des revendications précédentes,
**caractérisé en ce que**
la paroi (12) comporte un ensemble d'ouvertures traversantes (28) et le segment de fixation (14) est situé dans la zone des ouvertures traversantes (28).

9. Véhicule comprenant un composant d'habillage (10) conforme à l'une des revendications précédentes.

10. Procédé permettant d'orienter et de fixer un capteur et/ou un logement de réception d'un capteur (24) sur un composant d'habillage (10) d'un véhicule comprenant les étapes suivantes consistant à :
- se procurer un composant d'habillage (10) destiné à un véhicule qui comporte une paroi (12),
- mettre en forme au moins un segment de fixation (14) permettant d'orienter et de fixer un capteur ou mettre en forme un logement de réception d'un capteur (24) permettant de recevoir le capteur sur la paroi (12) du composant d'habillage (10) lors de l'étape consistant à se procurer l'habillage (10) ou dans une étape séparée de sorte que la paroi (12) et le segment de fixation (14) ou le logement de réception du capteur (24) soient réalisés en une seule pièce, le segment de fixation (14) ayant une épaisseur de paroi diminuée (18) au moins dans la zone de transition (16) avec la paroi (12), et
- appliquer des moyens de stabilisation (20) dans la zone de transition (16) pour stabiliser le segment de fixation (14).

11. Procédé conforme à la revendication 10,
comprenant les étapes suivantes consistant à :
- réaliser le segment de fixation (14) sous la forme d'un ensemble de nervures (30),
- appliquer les moyens de stabilisation (20) réalisés sous la forme d'un adhésif (22) dans la zone de transition (16), cet adhésif pouvant être durci par une action externe,
- positionner un logement de réception d'un capteur (24) de sorte qu'il coopère avec les nervures (30) et l'adhésif (22), et
- durcir l'adhésif (22).
